# EUROPÄISCHE PATENTSCHRIFT

(11) **EP 3 066 730 B1**
(45) Veröffentlichungstag und Bekanntmachung des Hinweises auf die Patenterteilung: **04.11.2020**
(21) Anmeldenummer: 15741855.9
(22) Anmeldetag: 27.03.2015
(51) Int. Cl.: F03D 9/25, H02G 3/03, H02G 9/06

(54) **KÜHLVORRICHTUNG**
COOLING DEVICE
DISPOSITIF DE REFROIDISSEMENT

(30) Priorität: 31.03.2014 DE 102014206000
(43) Veröffentlichungstag der Anmeldung: 14.09.2016
(73) Patentinhaber: Siemens Gamesa Renewable Energy A/S, 7330 Brande (DK)
(72) Erfinder: SOERENSEN, Johnny, DK-6920 Videbæk (DK)
(74) Vertreter: Aspacher, Karl-Georg
(86) Internationale Anmeldenummer: PCT/EP2015/056769
(87) Internationale Veröffentlichungsnummer: WO 2015/150277

(56) Entgegenhaltungen:
- EP-A1- 0 161 420
- WO-A2-2008/052562
- DE-A1- 2 252 925
- DE-A1- 2 554 650
- DE-A1-102005 040 804
- DE-A1-102012 016 670
- JP-A- 2002 147 660
- US-A- 3 955 042
- US-A- 5 591 937

## Beschreibung

Die Erfindung beschreibt eine Kühlvorrichtung zur Kühlung einer Stromkabelvorrichtung.

Eine für den Transport von elektrischer Leistung ausgestaltete Stromkabelanordnung umfasst generell mindestens eine schützende Hülle oder Ummantelung. Beispielsweise können die an einem Generator entstehenden Energieleiter individuell mit einer isolierenden Hülle versehen und gebündelt von einer robusten Kabel-Schutzhülle aus HDPE (high-density polyethylene) oder einem ähnlichen Kunststoff ummantelt werden. Üblicherweise besteht eine Stromkabelanordnung aus einer Mehrzahl von Energieleitern insbesondere aus Kupfer, welche innerhalb der Kabel-Schutzhülle aufgenommen und dort wasserdicht und vor mechanischer und chemischer Beschädigung geschützt eingebettet sind.

Bezogen auf einen Windpark dient eine Stromkabelanordnung beispielsweise zur Energieübertragung zwischen Windenergieanlagen des Windparks und/oder zwischen einer Windenergieanlage und einem elektrischen Umspannwerk. Generell verlassen die Stromkabel die Windenergieanlage in deren unteren Bereich, beispielsweise nach einer im unteren Turmbereich bzw. im oberen Bereich einer tragenden Konstruktion angeordneten Schaltanlage. Dieser Übergang wird üblicherweise als 'cable hangoff' bezeichnet. Die tragende Konstruktion kann beispielsweise ein im Meeresboden verankerter Dreifuß oder Pfahlträger sein. Befindet sich die Windenergieanlage im Offshore-Bereich, wird die Stromkabelanordnung generell als Seekabel oder Offshore-Kabel am oder im Meeresboden verlegt. Um die teuren Folgen einer Verletzung der Stromkabelanordnung zu vermeiden, wird diese generell auch zusätzlich in einem weiteren Schutzrohr verlegt.

Die Energieleiter einer Stromkabelanordnung werden insbesondere beim Transport von Starkstrom aufgeheizt, und eine Ableitung der entstehenden Hitze ist daher in der Regel erwünscht. Wird eine Stromkabelanordnung als Seekabel verlegt, wird der unter Wasser verlegte Abschnitt relativ effektiv gekühlt. Die Stromkabelanordnung einer Windenergieanlage wird in der Regel so verlegt, dass die Stromkabelanordnung das untere Ende des Turms verlässt und in das Meer geführt wird. Der Turm ist generell auf einem Träger - beispielsweise auf einem Dreifuß - montiert, so dass sich das untere Ende des Turms einige Meter oberhalb des Meeresspiegels befindet. Somit wird der Turm bei Wellengang vor Stößen geschützt. Der der Luft ausgesetzter Abschnitt der Stromkabelanordnung wird demnach nur unzureichend gekühlt, vor allem, wenn die Windenergieanlage bei voller oder nahezu voller Leistung läuft.
Wie oben erwähnt, steigt die Temperatur eines Stromkabels bei erhöhter Stromlast, so dass mit steigender Temperatur die Leitfähigkeit des Stromkabels nachlässt. Um auch bei hoher Belastung ausreichend Strom transportieren zu können, muss daher der Durchmesser des Stromkabels entsprechend groß ausfallen. Trotzdem können unvorteilhafte "hot spots" in den Energieleitern entstehen, und die Energieübertragung wird beeinträchtigt. Um die Entstehung solcher "hot spots" in der Stromkabelanordnung einer Windenergieanlage zu vermeiden, kann eine Drosselung ihrer Leistung erforderlich sein, welche wiederum den Ertrag des Windparks negativ beeinflusst. Um rechtzeitig Maßnahmen ergreifen zu können, wird bei einer bekannten Vorgangsweise eine Überwachung der Kabeltemperaturen unter Verwendung von faseroptischen Sensoren durchgeführt. Vor allem bei einem Windpark mit einer Vielzahl an Windturbinen kann eine solche Temperaturüberwachung sehr aufwändig und teuer ausfallen.

Aus dem Dokument "Siemens - Künstlich gekühlte Kabel bis 420 kV" Kabelvorrichtungen zu kühlen, die in großen Stadtnetzwerken verwendet werden. Eine aus diesem Dokument bekannte Kabelvorrichtung weißt folgende Merkmale auf: Ein Außenrohr, welches derart ausgestaltet ist, um eine Kabelanordnung so aufzunehmen, dass ein Zwischenraum für die Aufnahme einer Kühlwasserschicht zwischen Außenrohr und Kabelanordnung verbleibt. Desweiteren ist ein Druckregler zur Regelung des Wasserdrucks in der Kühlwasserschicht vorgesehen.

Ein ähnliches Kühlkonzept für Kabel ist aus der Druckschrift DE 25 54 650 C3 bekannt. Dabei wird das Kühlmedium Wasser verdampft. Mit dem Verdampfen wird ein effizientes Kühlen einer erdverlegten Starkstromkabelanordnung erzielt.

Aus dem Dokument DE 10 69 253 B geht schließlich eine Kabelvorrichtung mit ein Außenrohr und einer im Außenrohr angeordneten Kabelanordnung hervor.

Die Druckschrift DE102012016670A1 beschreibt eine ähnliche Kabelvorrichtung für das Stromkabel einer Windenergieanlage, mit einem thermischen Isolator innerhalb einer J-Tube, um einen Konvektionskreislauf zu fördern und offenbart den Oberbegriff des Anspruchs 1.

Es ist eine Aufgabe der vorliegenden Erfindung, einen Windpark mit einer verbesserten und kostengünstigen Stromkabelkühlung bereitzustellen.

Die gestellte Aufgabe wird durch eine einen Windpark gemäß Patentanspruch 1 sowie durch ein Verfahren zur Bereitstellung eines Windparks gemäß Patentanspruch 12 gelöst.

Der erfindungsgemäße Windpark beinhaltet eine Anzahl von Kabelanordnungen für due Übertragung elektrischer Leistung aus Windenergieanlagen und eine Anzahl Kühlvorrichtungen zur Kühlung der Kabelanordnungen. Eine der Kühlvorrichtungen beinhaltet ein Außenrohr, welches derart ausgestaltet ist, um die Kabelanordnung so aufzunehmen, dass ein Zwischenraum für die Aufnahme einer Kühlwasserschicht zwischen Außenrohr und Kabelanordnung verbleibt, ein Verbindungselement zur Erstellung einer wasserdichten Verbindung zwischen Außenrohr und Kabelanordnung. Der erfindungsgemäße Windpark ist dadurch gekennzeichnet, dass eine der Kühlvorrichtungen einen Druckregler zur Regelung des Wasserdrucks in der Kühlwasserschicht umfasst und dass ein Verbindungselement im Bereich eines Endpunkts der Kabelanordnung an einer Windenergieanlage angeordnet ist, wobei das Verbindungselement eine Schweißnahtverbindungseinrichtung zur Erstellung einer Schweißnahtverbindung zwischen der Kabelanordnung und dem Außenrohr umfasst.

Ein weiterer Vorteil der Kühlvorrichtung liegt darin, dass eine Schweißnahtverbindung zuverlässig und formbeständig ist. Ein weiterer Vorteil der Kühlvorrichtung liegt darin, dass ein heiß gewordenes Kabel in der Kabelanordnung stets vorteilhaft gekühlt werden kann, da Wasser eine Wärme leitende Eigenschaft besitzt. Ein weiterer Vorteil der erfindungsgemäßen Kühlvorrichtung liegt darin, dass die Wasserschicht durch das Verbindungselement gehalten wird. Weiterhin ist es von Vorteil, dass der Wasserdruck durch den Druckregler angepasst werden kann, beispielsweise, um evtl. auftretende Lufteinschlüsse durch Kühlwasser zu verdrängen. Zudem kann, wie im Nachfolgenden ausführlich erklärt wird, auf einfacher Weise eine Auswertung des Wasserdrucks wichtige Angaben liefern bzgl. Dichtigkeit der Kühlvorrichtung, Kabeltemperatur, usw.

Bevorzugt wird der Zwischenraum zumindest an einer Seite der Kabelanordnung gebildet, bevorzugt aber rundum, so dass die Kühlwasserschicht effektiv eine Wasserhülle um der Kabelanordnung bilden kann. Somit wird gewährleistet, dass die Kabelanordnung von allen Seiten von Kühlwasser umgeben wird.

Die Kühlvorrichtung umfasst eine Kabelanordnung, insbesondere eine Stromkabelanordnung, und eine erfindungsgemäße Kühlvorrichtung.

Ein Vorteil des erfindungsgemäßen Windparks liegt darin, dass heiß gewordene Stromkabel in den Kabelanordnungen stets vorteilhaft gekühlt werden können. Eine Drosselung der Leistung einer oder mehrerer Windenergieanlagen aufgrund einer unvorteilhaften Überhitzung eines oder mehrerer Energieleiter lässt sich somit vermeiden.

Das erfindungsgemäße Verfahren zur Bereitstellung eines Windparks, insbesondere eines Windparks mit Stromkabelanordnung beinhaltet gemäß Patentanspruch 12 folgende Schritte:
1) Aufnehmen der Kabelanordnung in ein Außenrohr, so dass ein Zwischenraum für die Aufnahme einer Kühlwasserschicht zwischen Außenrohr und Kabelanordnung verbleibt; Platzierung von Verbindungselemente an den Endpunkten der Kabelanordnung, wobei ein Verbindungselement eine Schweißnahtverbindungseinrichtung zur Erstellung einer Schweißnahtverbindung zwischen der Kabelanordnung und dem Außenrohr umfasst,
2) Erstellen einer wasserdichten Schweißnahtverbindung zwischen Kabelanordnung und Außenrohr;
3) Füllen des Zwischenraums mit einer Wasserschicht; und
4) Regeln des Wasserdrucks in der Wasserschicht.

Ein Vorteil des erfindungsgemäßen Verfahrens liegt darin, dass eine Schweißnahtverbindung innerhalb kurzer Zeit durchgeführt werden kann. Ein weiterer Vorteil des erfindungsgemäßen Verfahrens liegt darin, dass eine effektive Kühlung auf kostengünstige und einfache Weise erzielt werden kann. Als Außenrohr kann ein einfaches, leicht erhältliches Rohr verwendet werden. Insbesondere bei einer Kühlvorrichtung für ein Seekabel kann ein bereits vorhandenes Schutzrohr verwendet werden. Ein weiterer Vorteil liegt darin, dass einfaches Wasser als Kühlmittel verwendet werden kann, so dass die Kühlung ohne Belastung der Umwelt erzielt wird.

Die abhängigen Ansprüche sowie die nachfolgende Beschreibung enthalten besonders vorteilhafte Weiterbildungen und Ausgestaltungen der Erfindung, wobei insbesondere auch die Ansprüche einer Anspruchskategorie analog zu den abhängigen Ansprüchen einer anderen Anspruchskategorie weitergebildet sein können.

Wie eingangs erwähnt, kann eine Kabelanordnung mehrere Energieleiter umfassen. Des Weiteren kann eine Kabelanordnung auch eine Mehrzahl von Datenleitern insbesondere aus Kupfer oder Glas- bzw. Kunststofffasern umfassen. Im Folgenden ist unter dem Begriff "Kabelanordnung" in erster Linie eine Stromkabelanordnung zu verstehen, wobei die Kabelanordnung selbstverständlich auch eine beliebige Anzahl Datenleiter führen kann. Die erfindungsgemäße Kühlvorrichtung dient in erster Linie zur Kühlung der Energieleiter, da diese in der Regel Starkstrom führen und im Betrieb erhitzt werden können. Bei der erfindungsgemäßen Kühlvorrichtung ist das Außenrohr nicht zwingend das äußerste, und die Verwendung von weiteren Ummantelungen bzw. Schutzhüllen ist nicht auszuschließen.

Im Folgenden wird davon ausgegangen, dass der erfindungsgemäße Windpark mindestens eine Offshore-Windenergieanlage umfasst. Es wird auch davon ausgegangen, dass eine Kabelanordnung oder Kabelvorrichtung ab einem 'cable hangoff' am Turm einer Offshore-Windenergieanlage durch einen Luftraum hindurch in das Meer erstreckt. Wie Eingangs beschrieben, verlässt die Kabelanordnung die Windenergieanlage üblicherweise im Bereich einer Schaltanlage im unteren Turmbereich bzw. im oberen Bereich einer tragenden Konstruktion. Eine Kabelanordnung hat in der Regel zwei Endpunkte, d. h. die Kabelanordnung erstreckt sich zwischen zwei Endpunkten. Der zu kühlende Abschnitt der Kabelanordnung wird durch eine entsprechende Platzierung eines oder mehrerer Verbindungselemente bestimmt. Wird je ein Verbindungselement an beiden Enden bzw. an den Endpunkten einer Kabelanordnung angebracht, kann die Kabelanordnung zwischen diesen beiden Verbindungselementen gekühlt werden. Im Folgenden wird davon ausgegangen, dass sich die Kühlvorrichtung zwischen beiden Endpunkten einer Kabelanordnung erstreckt. Beispielsweise kann eine Kabelanordnung zwischen zwei Windenergieanlagen verlegt werden, so dass sich die erfindungsgemäße Kühlvorrichtung auch zwischen den beiden Windenergieanlagen erstreckt. Selbstverständlich kann aber die Kühlvorrichtung an einem solchen Endpunkt beginnen, aber an einer anderen Art von Endpunkt abschließen, zum Beispiel an einem Offshore- bzw. Onshore-Umspannwerk.

Besonders bevorzugt ist ein Verbindungselement im Bereich eines Endpunkts der Kabelanordnung angeordnet, d. h. im Entstehungsbereich der Kabelanordnung. Ein solcher Endpunkt kann etwas entfernt, z.B. 3 m - 10 m, von dem 'cable hangoff' angeordnet sein. Da die Kühlwasserhülle bevorzugt einen zu Wärmebildung tendierenden Bereich umschließen soll, kann das Verbindungselement entsprechend platziert werden. In einer weiteren bevorzugten Ausführungsform kann ein Endpunkt der Kabelanordnung an einer Windturbine angeordnet sein. Beispielsweise kann die Kabelanordnung am unteren Bereich des Turms einer Windenergieanlage entstehen. In diesem Fall kann ein Verbindungselement an der Kabelanordnung angebracht werden, so dass es sich in vorteilhafter Nähe zum Turm befindet. Somit kann ein Großteil der - ansonsten der Luft ausgesetzten - Kabelanordnung effektiv gekühlt werden, so dass die Entstehung von "hot spots" in diesem Bereich ausbleibt. Die vorteilhafte Kühlung entsteht dadurch, dass ein Verbindungselement oberhalb des Wasserspiegels bzw. der Meereshöhe angeordnet ist, so dass auch der oberhalb des Wasserspiegels angeordnete Abschritt der Stromkabelanordnung stets von Kühlwasser umgeben wird. Ein weiterer Vorteil dieser Anordnung liegt darin, dass aufgrund der optimalen Kühlung der Durchmesser des Stromkabels geringer ausfallen kann als bei den herkömmlichen Vorrichtungen, bei denen die Kabelanordnung der Luft ausgesetzt wird und somit nicht ausreichend gekühlt werden kann.

Wie eingangs erwähnt, dient das Verbindungselement (im Folgenden auch "Verbinder" genannt) zur Erstellung einer wasserdichten Verbindung zwischen Außenrohr und Kabelanordnung. Um den Größenunterschied zwischen Kabelanordnung und Außenrohr auszugleichen kann der Innendurchmesser des Außenrohrs durch eine Verjüngung auf den Außendurchmesser der Kabelanordnung reduziert werden. Alternativ kann der Raum oder Abstand zwischen einer Außenfläche der Kabelanordnung und einer Innenfläche des Außenrohrs durch ein passendes Zwischenstück überbrückt werden. Dieses Zwischenstück kann in beliebiger geeigneter Weise mit der Kabelanordnung und dem Außenrohr verbunden werden. In einer besonders bevorzugten Variante der Erfindung jedoch passt sich das Verbindungselement an den unterschiedlichen Durchmesser des Außenrohrs bzw. der Kabelanordnung an. Beispielsweise kann ein Innendurchmesser an einem Ende des Verbindungselements dem Außendurchmesser des Außenrohrs entsprechen. Am anderen Ende des Verbindungselements kann der Innendurchmesser dem Außendurchmesser der Kabelanordnung entsprechen. In einer möglichen Variante kann das Verbindungselement als trichterförmiges Element gefertigt werden. Alternativ kann das Verbindungselement eine stufenartige Form aufweisen.

Gemäß der Erfindung umfasst das Verbindungselement eine Schweißnahtverbindungseinrichtung zur Erstellung einer Schweißnahtverbindung zwischen der Kabelanordnung und dem Außenrohr. Die Schweißnahtverbindungseinrichtung kann beispielsweise als eine Elektrofusionseinrichtung realisiert werden. Hierzu wird mindestens ein Heizelement ringförmig im Verbinder eingebettet und mit nach außen führenden Leitern versehen, so dass eine angemessene Spannung auf das Heizelement gelegt werden kann. Besteht das Außenrohr bzw. der Außenmantel der Kabelanordnung aus HDPE, kann auf diese Weise eine schnelle und vollständige ringförmige Verschmelzung der beiden erfolgen. Eine solche Verbindung ist erwiesenermaßen zuverlässig und formbeständig und kann innerhalb kurzer Zeit durchgeführt werden. Wie bereits erwähnt, kann das Verbindungselement eine stufenartige Form aufweisen, um den Größenunterschied zwischen der Kabelanordnung und dem Außenrohr zu überbrücken. In einer besonders bevorzugten Variante der Erfindung umfasst die Schweißnahtverbindung eine zwischen dem Verbindungselement und dem Außenrohr angeordnete erste Schweißnaht und eine zwischen dem Verbindungselement und der Kabelanordnung angeordnete zweite Schweißnaht auf.

Das Kühlwasser kann noch vor Anbringung des Verbindungselements eingefüllt werden. Beispielsweise kann sich der Zwischenraum bei der Kabelverlegung mit Meerwasser füllen. Nach Anbringung der Verbindungselemente an einem oder an beiden Endpunkten der Kabelanordnung kann Luft aus den entstehenden Hohlräumen durch eine nachträglich eingefüllte Flüssigkeit verdrängt werden. Daher, in einer besonders bevorzugten Variante der Erfindung, beinhaltet die Kühlvorrichtung eine Eintrittsöffnung für das nachträgliche Einfüllen einer Flüssigkeit in den Zwischenraum. Beispielsweise kann das Verbindungselement mindestens eine solche Eintrittsöffnung aufweisen.

Als Kühlwasser kann Wasser bzw. Meereswasser verwendet werden. In einer besonders bevorzugten Variante der Erfindung wird jedoch eine Sole einfüllt. Beispielsweise kann eine gesättigte Salzlösung mit ca. 26% Salzgehalt eingefüllt werden. Eine derart gesättigte Salzlösung als Kühlwasser verleiht der Kabelanordnung einen vorteilhaft hohen statischen Auftrieb, so dass die Kabelanordnung am Boden des Außenrohrs nicht aufliegt. Stattdessen schwebt die Kabelanordnung im Zwischenraum. Somit wird gewährleistet, dass die Kabelanordnung rundum von Kühlwasser umgeben ist, und dass eine optimale Kühlung erreicht werden kann. Die schwebende Anordnung in der Sole hat zudem den Vorteil, dass Verschleiß effektiv verringert wird.

Der Druckregler kann in einer bevorzugten Variante der Erfindung an der Eintrittsöffnung angeschlossen sein. Nach Einfüllen des Kühlwassers in den Raum zwischen Kabelanordnung und Außenrohr kann anschließend eine Anpassung des Wasserdrucks erfolgen. Beispielsweise kann so lange Wasser eingepumpt werden, bis ein zufriedenstellender Wasserdruck erreicht wird. Somit kann mit hoher Sicherheit erreicht werden, dass sämtliche Lufteinschlüsse aus dem Zwischenraum ausgetrieben bzw. ausgepresst werden.

Wie eingangs erwähnt, kann die Temperatur eines Energieleiters (und folglich auch die Umgebungstemperatur in der Kabelanordnung) erheblich steigen, sollte der Energieleiter einen starken elektrischen Strom führen. Bei der erfindungsgemäßen Kühlvorrichtung ist die Stromkabelanordnung von einer Wasserhülle umgeben. Steigt die Wassertemperatur, ist eine Erhöhung des Drucks die Folge. In einer besonders bevorzugten Variante der Erfindung beinhaltet die Kühlvorrichtung eine Drucküberwachungseinheit zur Überwachung des Wasserdrucks in der Kühlwasserhülle. Beispielsweise kann in einem bevorzugten Ausführungsbeispiel die Drucküberwachungseinheit in Form eines Expansionstanks realisiert werden. Ein solcher Expansionstank kann an einer beliebigen Stelle angebracht werden. Bevorzugt wird der Expansionstank jedoch an der Eintrittsöffnung eines Verbindungselements angeschlossen. Wird die Drucküberwachungseinheit an einer anderen Stelle angebracht, umfasst die Eintrittsöffnung bevorzugt ein Ventil oder eine andere Verschlussmöglichkeit, so dass die Kühlvorrichtung nach Einfüllen des Kühlwassers und nach Einstellung des Wasserdrucks im Wesentlichen wasserdicht verschlossen werden kann.

Die Entwicklung des Wasserdrucks - ob der Wasserdruck steigt oder fällt - kann auf beliebige Weise erfasst werden. Beispielsweise könnte der Expansionstank eine durchsichtige Fläche aufweisen, so dass eine optische Kontrolle des Wasserdrucks erfolgen kann. Bevorzugt jedoch umfasst die Drucküberwachungseinheit einen Druckanzeiger, welcher Informationen bzgl. des Wasserdrucks in einer geeigneter Form weitergeben kann. Befindet sich die Drucküberwachungseinheit zum Beispiel an einer Offshore-Windenergieanlage, kann ein automatischer Druckanzeiger Informationen an eine Steuerungseinheit des Windparks übermitteln. Die Übermittlung kann beispielsweise über eine kabellose Verbindung erfolgen. In einer besonders bevorzugten Variante der Erfindung umfasst der Windpark eine Steuereinrichtung zur Steuerung der Windenergieanlagen gemäß einem überwachten Druck in der Wasserhülle der Kühlvorrichtung. Beispielsweise können mehrere Kabelanordnungen der Anzahl an Windenergieanlagen jeweils mit einer erfindungsgemäßen Kühlvorrichtung ausgestattet sein. Jede oder nur eine Anzahl dieser Kühlvorrichtungen kann mit einer Drucküberwachungseinheit ausgestattet sein. Informationen von den Drucküberwachungseinheiten können in der Steuereinrichtung ausgewertet werden. Deuten die Informationen auf einen mäßigen Wasserdruck trotz hoher Leistung hin, kann von einer fehlerfreien Funktion der Wasserkühlung ausgegangen werden. Deuten die Informationen jedoch auf einen erhöhten Wasserdruck infolge einer sehr starken Erhitzung der Energieleiter hin, kann die Steuereinrichtung die Leistung der Windenergieanlagen entsprechend anpassen. Sollten die Informationen auf einen Druckverlust hindeuten, kann die Steuereinrichtung auf ein Leck in der Kühlwasservorrichtung schließen. Beispielsweise kann das Außenrohr durch Fremdeinwirkung beschädigt werden. Die Informationen von der Drucküberwachungseinheit können ausgewertet werden, um solche Schäden rasch zu erkennen.

Das Außenrohr (mit der Kabelanordnung) kann auf dem Meeresboden verlegt werden und/oder kann im Meeresboden teilweise oder komplett vergraben werden. Je nach Beschaffenheit der Verlegungsstrecke kann das Außenrohr einem gleichmäßigen Verlauf folgen, kann aber auch über Erhebungen und Vertiefungen geführt werden müssen. Ist der Verlauf nicht gleichmäßig, können Lufteinschlüsse im Außenrohr entstehen. Aus diesem Grund kann bei dem erfindungsgemäßen Verfahren, bevorzugt zeitlich vor Schritt 1), ein zusätzlicher Schritt zum Ausschwemmen von Lufteinschlüsse aus dem Außenrohr durchgeführt werden. Hierzu kann, nachdem der Zwischenraum wasserdicht gemacht wurde, Wasser in den Zwischenraum eingefüllt werden, und dieses kann an einem Ende (zum Beispiel im Bereich eines Verbindungselements) so unter Druck gesetzt werden, dass evtl. vorhandene Lufteinschlüsse ausgetrieben werden.

Möglich ist auch, dass bei der Verlegung des Außenrohrs Schmutz oder anderes Fremdmaterial Eingang in das Außenrohr finden. Aus diesem Grund kann bei dem erfindungsgemäßen Verfahren, bevorzugt zeitlich vor Schritt 1), zur Reinigung des Außenrohrs ein Molch durch das Außenrohr geschleust werden. Der Molch kann in der üblichen Weise an einem Ende des Außenrohrs eingeschleust und am anderen Ende wieder herausgenommen werden. Der Fachmann wird mit entsprechenden Einzelheiten der Molchtechnik vertraut sein.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich.

Es zeigen:
Figur 1 ein Ausführungsbeispiel einer erfindungsgemäßen Kühlvorrichtung,
Figur 2 eine perspektivische Darstellung eines Anteils der Kühlvorrichtung aus Figur 1,
Figur 3 ein Querschnitt durch einen Endbereich der Kühlvorrichtung aus Figur 1,
Figur 4 ein weiteres Ausführungsbeispiel einer erfindungsgemäßen Kühlvorrichtung in einem ersten Zustand,
Figur 5 die Kühlvorrichtung aus Figur 3 in einem zweiten Zustand,
Figur 6 die Kühlvorrichtung aus Figur 3 in einem dritten Zustand,
Figur 7 eine Kabelanordnung nach dem Stand der Technik.

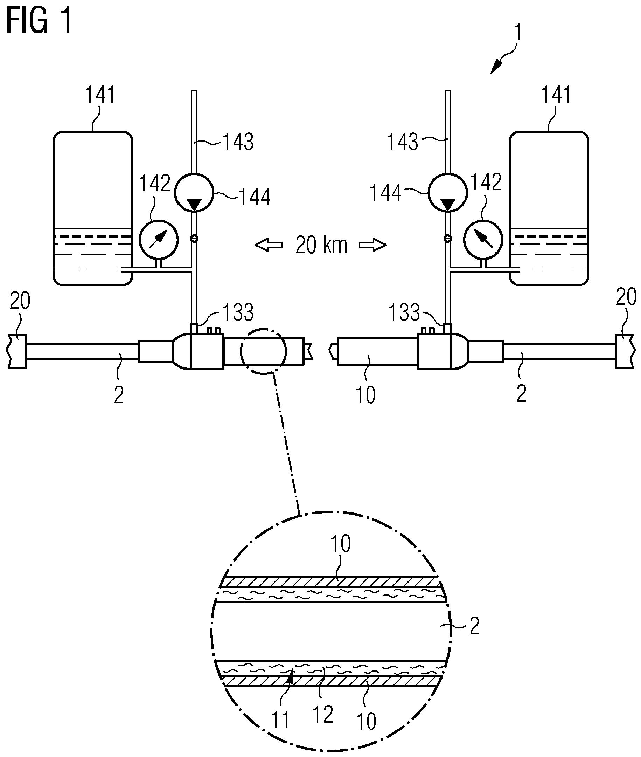

Figur 1 zeigt ein Ausführungsbeispiel einer Kühlvorrichtung 1, welche ein um eine Kabelanordnung 2 angeordnetes Außenrohr 10 umfasst. Die Kabelanordnung 2 kann beliebig lang sein und sich zwischen ihren zwei Endpunkten 20 über mehrere Kilometer erstrecken. Die Kabelanordnung 2 dient vor allem als Energieträger und führt eine Anzahl Energieleiter für den Transport von Starkstrom, z.B. bei einer Spannung von 33 kV oder 66 kV. Selbstverständlich kann die Kabelanordnung 2 auch eine beliebige Anzahl Datenträger umfassen. Eine Kühlwasserhülle 12 wird zwischen dem Außenrohr 10 und der Kabelanordnung 2 durch zwei Verbindungselemente 13 gehalten. Diese bilden eine wasserdichte Verbindung zwischen Außenrohr 10 und Kabelanordnung 2. Kühlwasser bzw. Füllwasser kann durch eine Eintrittsöffnung 133 eingefüllt werden. Im vergrößerten Bereich der Zeichnung wird eine in einer Sole 12 schwebende Kabelanordnung 2 gezeigt. Beispielsweise verleiht eine Sole mit ca. 26% Sättigung der Kabelanordnung 2 genügend Auftrieb, so dass diese im Kühlwasser 12 'schwimmt' und davon abgehalten wird, am Boden des Außenrohrs 10 aufzuliegen. Der Wasserdruck in der Kühlwasserhülle 12 wird durch eine Zuleitung 143 und eine Pumpe 144 geregelt und durch einen Expansionstank 141 bzw. eine Druckmesseinrichtung 142 überwacht.

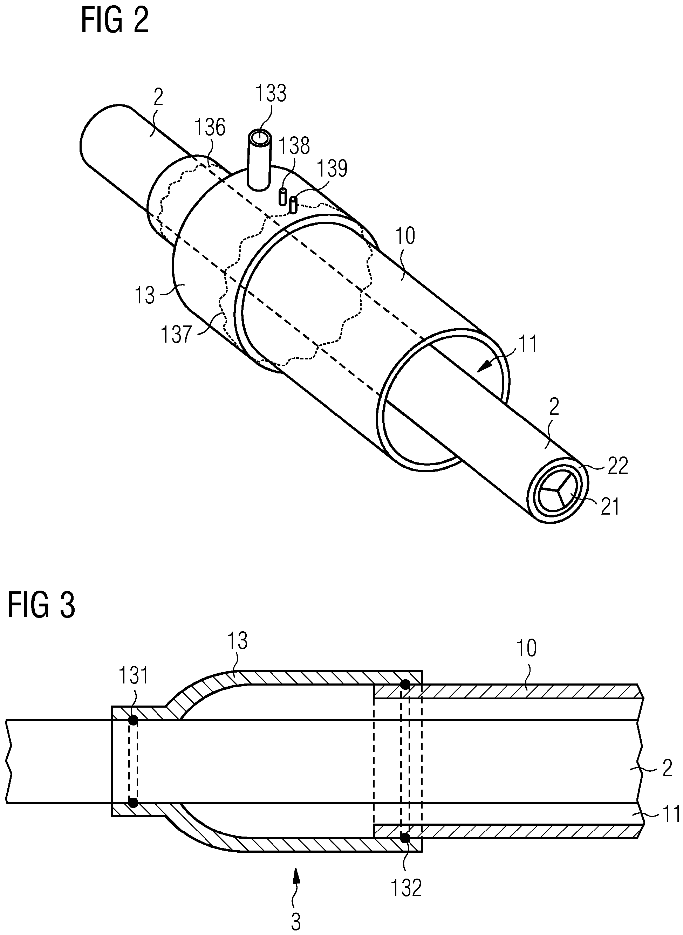

Figur 2 zeigt eine perspektivische Darstellung eines Anteils der Kühlvorrichtung 1 aus Figur 1, mit einem Außenrohr 10 um eine Kabelanordnung 2 gelegt. In diesem Beispiel umfasst die Kabelanordnung 2 wie üblich mehrere Energieleiter 21 und wird von einer HDPE Kunststoff-Ummantelung 22 geschützt. Das Außenrohr 10 besteht auch aus einem Kunststoff wie HDPE. Das Verbindungselement 13 beinhaltet eine Schweißnahtverbindungseinrichtung, welche zwei eingebettete Heizwendel 136, 137 bzw. elektrische Leiter 138, 139 umfasst. Um das Material des Verbindungselements 13 mit dem Material des Außenrohrs 10 bzw. der Ummantelung 22 der Kabelanordnung 2 wird eine elektrische Spannung an die Leiter 138, 139 gelegt. Die entstehende Wärmebildung in den Heizwendeln 136, 137 führt zur gewünschten Verschmelzung des Kunststoffs. Die Schweißnahtverbindungen 131, 132 werden in Figur 3 gezeigt. Der entstehende Hohlraum 11, in dem eine Wasserhülle gehalten wird, ist hier auch gezeigt. Am anderen Ende der Kabelanordnung 20 kann ein ähnliches Verbindungselement 13 mit Außenrohr 10 und Kabelanordnung 2 verschmolzen sein. Selbstverständlich kann ein wasserdichter Abschluss auf beliebige Weise realisiert werden. Das Außenrohr 10 und die Verbindungselemente 13 der Kühlvorrichtung 1 bilden zusammen mit der Kabelanordnung 2 eine erfindungsgemäße Kabelvorrichtung 3.

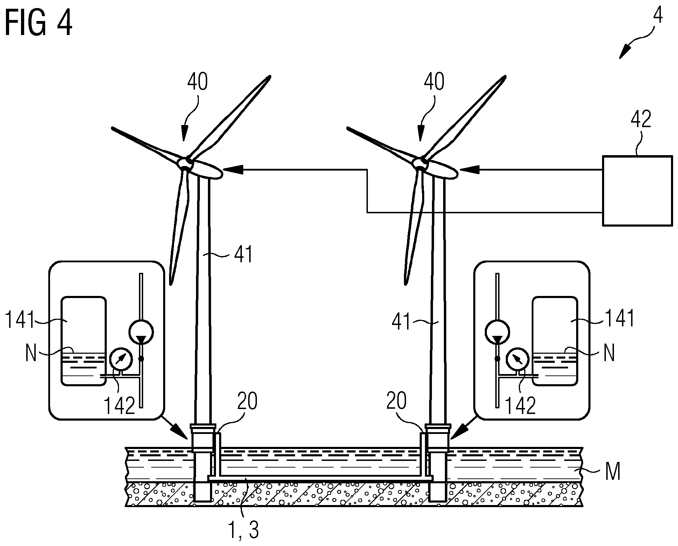

Figur 4 zeigt ein weiteres Ausführungsbeispiel der erfindungsgemäßen Kühlvorrichtung 1. In diesem Beispiel erstreckt sich die Kabelanordnung 2 zwischen zwei Windenergieanlagen 40 eines Offshore-Windparks 4. Ein Endpunkt 20 der Kabelanordnung 2 befindet sich am Turm 41 einer Windenergieanlage 40, so dass sich ein Abschnitt der Kabelanordnung 2 zwischen Turm 41 und Meer M erstreckt. Ein Verbindungselement (der Klarheit wegen im Bild nicht dargestellt) der Kühlvorrichtung 1 wird an diesem Abschnitt, bevorzugt möglichst nah am Turm 41, angebracht. Somit wird auch dieser Abschnitt der Kabelanordnung 2 effektiv durch Wasser gekühlt. Der Wasserdruck im Zwischenraum der Kühlvorrichtung 1 wird überwacht. Hierzu kann ein Druckmessgerät 142 regelmäßig und/oder auf Abruf Messwerte an eine Steuereinrichtung 42 melden. Die Abbildung zeigt die Kühlvorrichtung 1 in einem ersten Zustand. Hier ist der Wasserpegel des Expansionstanks 141 auf einem normalen Stand bzw. an einem Normpegel N, so dass die Steuereinrichtung 42, welche die Leistung der Windenergieanlagen 40 regelt, keine Einschränkung bzw. Drosselung der Leistung einleiten muss.

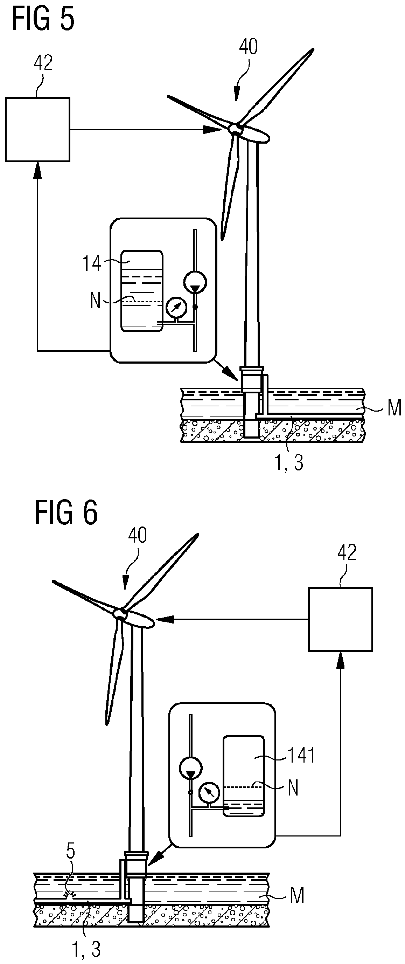

Figur 5 zeigt eine Kühlvorrichtung 1 in einem zweiten Zustand. Hier ist der Wasserpegel im Expansionstank gestiegen. Dieser Anstieg oberhalb des Normpegels N geht mit einer Wasserdruckerhöhung einher und deutet auf einen Anstieg des Wasserdrucks in der Kühlvorrichtung hin. Dies wiederum deutet auf eine unerwünscht hohe Temperatur in den Energieleitern hin. Wie oben beschrieben, kann das Druckmessgerät 142 die Werte an eine Steuereinrichtung melden, welche die Leistung der Windenergieanlage 40 entsprechend regelt.

Figur 6 zeigt eine Kühlvorrichtung 1 in einem dritten Zustand. Hier ist der Wasserpegel im Expansionstank stark gesunken, unterhalb des Normpegels N. Wie oben beschrieben, kann das Druckmessgerät 142 die Druckwerte an eine Steuereinrichtung melden. Ein solcher Druckverlust kann z. B. auf ein Leck 5 im Außenrohr 10 deuten. Mit den Informationen kann ein Betreiber des Windparks das Leck rasch orten, um die nötigen Maßnahmen ergreifen zu können.

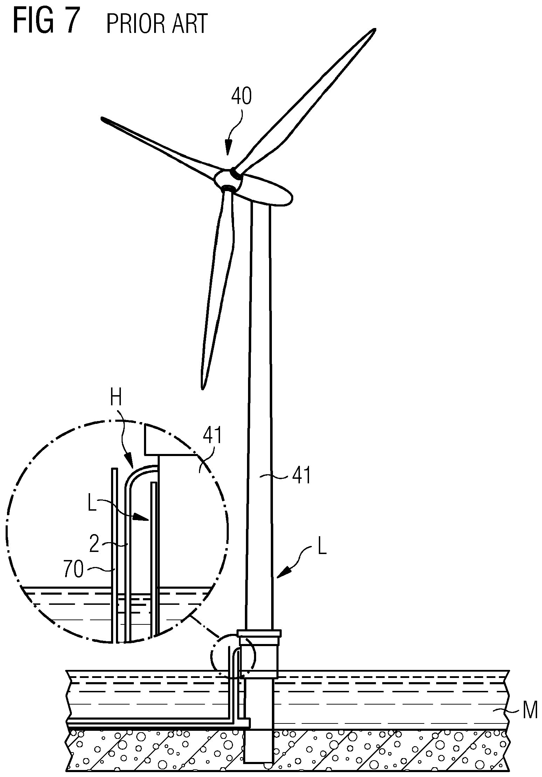

Figur 7 zeigt eine Kabelvorrichtung nach dem Stand der Technik. Auch hier verläuft die Kabelanordnung 2 vom Turm 41 der Windenergieanlage 40 in Richtung Meer. Die Kabelanordnung 2 ist in einem Außenrohr 70 verlegt, welches zum Schutz der Kabelanordnung 2 dient. Im Gegensatz zur erfindungsgemäßen Kühlvorrichtung bleibt hier ein Abschnitt der Kabelanordnung 2 der Luft L ausgesetzt. Läuft die Windenergieanlage 40 bei voller Leistung, kann ein "hot spot" H entstehen. Ein solcher "hot spot" senkt die Transportleistung der Energieträger, so dass die Leistung der Windenergieanlage 40 gedrosselt werden muss.

Es wird abschließend noch einmal darauf hingewiesen, dass es sich bei den zuvor beschriebenen Aufbauten um Ausführungsbeispiele handelt und dass das Grundprinzip auch in einem weiten Bereich vom Fachmann variiert werden kann, ohne den Bereich der Erfindung zu verlassen, soweit er durch die Ansprüche vorgegeben ist. Insbesondere ist es möglich, die Verbindungselemente bzw. die Drucküberwachungseinheit beliebig zu gestalten. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Windpark (4), beinhaltend eine Anzahl Kabelanordnungen (2) für die Übertragung elektrischer Leistung aus Windenergieanlagen (40), und beinhaltend eine Anzahl Kühlvorrichtungen (1) zur Kühlung der Kabelanordnungen (2), wobei eine der Kühlvorrichtungen Folgendes umfasst:
- ein Außenrohr (10), welches derart ausgestaltet ist, um die Kabelanordnung (2) so aufzunehmen, dass ein Zwischenraum (11) für die Aufnahme einer Kühlwasserschicht (12) zwischen Außenrohr (10) und Kabelanordnung (2) verbleibt,
- ein Verbindungselement (13) zur Erstellung einer wasserdichten Verbindung (131, 132) zwischen Außenrohr (10) und Kabelanordnung (2);
**dadurch gekennzeichnet, dass** eine der Kühlvorrichtungen (1) einen Druckregler (14) zur Regelung des Wasserdrucks in der Kühlwasserschicht (12) umfasst und dass
ein Verbindungselement (13) im Bereich eines Endpunkts (20) der Kabelanordnung (2) an einer Windenergieanlage (40) angeordnet ist, wobei das Verbindungselement (13) eine Schweißnahtverbindungseinrichtung (136, 137, 138, 139) zur Erstellung einer Schweißnahtverbindung (131, 132) zwischen der Kabelanordnung (2) und dem Außenrohr (10) umfasst.

2. Windpark nach Anspruch 1, **dadurch gekennzeichnet, dass** die Schweißnahtverbindungseinrichtung (136, 137, 138, 139) als eine Elektrofusionseinrichtung realisiert ist.

3. Windpark nach Anspruch 2, **dadurch gekennzeichnet, dass** die Schweißnahtverbindungseinrichtung (136, 137, 138, 139) mindestens ein ringförmig im Verbindungselement (13) eingebettetes Heizelement (136, 137) umfasst.

4. Windpark nach Anspruch 3, wobei die Schweißnahtverbindungseinrichtung (136, 137, 138, 139) mit nach außen führenden Leitern (138, 139) versehen ist, so dass eine angemessene Spannung auf ein Heizelement (136, 137) gelegt werden kann.

5. Windpark nach einem der Ansprüche 1 bis 4, wobei die Schweißnahtverbindung (131, 132) eine zwischen dem Verbindungselement (13) und dem Außenrohr (10) angeordnete erste Schweißnaht (131) und eine zwischen dem Verbindungselement (13) und der Kabelanordnung (2) angeordnete zweite Schweißnaht (132) umfasst.

6. Windpark nach einem der Ansprüche 1 bis 5, beinhaltend eine Eintrittsöffnung (133) zum Einfüllen von Kühlwasser (12) in den Zwischenraum (11).

7. Windpark nach einem der Ansprüche 1 bis 6, beinhaltend eine Drucküberwachungseinheit (141) zur Überwachung des Wasserdrucks in der Kühlwasserschicht (12).

8. Windpark nach Anspruch 7, worin die Drucküberwachungseinheit (141) einen Expansionstank (141) umfasst.

9. Windpark (4) nach einem der Ansprüche 1 bis 8, beinhaltend mindestens eine Offshore-Windenergieanlage (40), wobei eine Kabelanordnung (2) sich vom unteren Bereich der Offshore-Windenergieanlage (40) durch einen Luftraum (L) hindurch in das Meer (M) erstreckt.

10. Windpark nach einem der Ansprüche 1 bis 9, wobei ein Verbindungselement (13) der Kühlvorrichtung (1) im Bereich des Luftraums (L) angeordnet ist.

11. Windpark nach einem der Ansprüche 1 bis 10, beinhaltend eine Steuereinrichtung (42) zur Steuerung der Windenergieanlagen (40) gemäß einem überwachten Druck in der Wasserschicht (12) der Kühlvorrichtung (1).

12. Verfahren zur Bereitstellung eines Windparks nach einem der Ansprüche 1 bis 11 mit einer Stromkabelanordnung (2), wobei folgende Schritte durchgeführt werden:
1) Aufnehmen der Kabelanordnung (2) in ein Außenrohr (10), so dass ein Zwischenraum (11) für die Aufnahme einer Kühlwasserschicht (12) zwischen Außenrohr (1) und Kabelanordnung (2) verbleibt, Platzierung von Verbindungselemente (13) an den Endpunkten der Kabelanordnung (2), wobei ein Verbindungselement (13) eine Schweißnahtverbindungseinrichtung (136, 137, 138, 139) zur Erstellung einer Schweißnahtverbindung (131, 132) zwischen der Kabelanordnung (2) und dem Außenrohr (10) umfasst;
2) Erstellen einer wasserdichten Schweißnahtverbindung (131, 132) zwischen Kabelanordnung (2) und Außenrohr (1),
3) Füllen des Zwischenraums (11) mit einer Wasserschicht (12), und
4) Regeln des Wasserdrucks in der Wasserschicht (12).

13. Verfahren nach Anspruch 12, wobei zeitlich vor Schritt 1) ein Ausschwemmen von Lufteinschlüsse aus dem Außenrohr (10) und/oder ein Durchschleusen eines Molchs durch das Außenrohr (10) durchgeführt wird.

## Claims

1. Wind farm (4) containing a number of cable arrangements (2) for transmission of electrical power from wind turbines (40), and containing a number of cooling apparatuses (1) for cooling the cable arrangements (2), wherein one of the cooling apparatuses comprises the following:
- an outer pipe (10), which is configured in such a way as to accommodate the cable arrangement (2) such that an intermediate space (11) for accommodation of a cooling-water layer (12) remains between the outer pipe (10) and the cable arrangement (2),
- a connection element (13) for establishing a water-tight connection (131, 132) between the outer pipe (10) and the cable arrangement (2);
**characterized in that** one of the cooling apparatuses (1) comprises a pressure regulator (14) for regulating the water pressure in the cooling-water layer (12), and **in that** a connection element (13) is arranged in the region of an end point (20) of the cable arrangement (2) on a wind turbine (40), wherein the connection element (13) comprises a weld seam connection device (136, 137, 138, 139) for establishing a weld seam connection (131, 132) between the cable arrangement (2) and the outer pipe (10).

2. Wind farm according to Claim 1, **characterized in that** the weld seam connection device (136, 137, 138, 139) is realized as an electrofusion device.

3. Wind farm according to Claim 2, **characterized in that** the weld seam connection device (136, 137, 138, 139) comprises at least one heating element (136, 137) which is embedded annularly in the connection element (13).

4. Wind farm according to Claim 3, wherein the weld seam connection device (136, 137, 138, 139) is provided with conductors (138, 139) which lead to the outside, with the result that an appropriate voltage can be applied to a heating element (136, 137).

5. Wind farm according to one of Claims 1 to 4, wherein the weld seam connection (131, 132) comprises a first weld seam (131), which is arranged between the connection element (13) and the outer pipe (10), and a second weld seam (132), which is arranged between the connection element (13) and the cable arrangement (2).

6. Wind farm according to one of Claims 1 to 5, containing an entry opening (133) for introduction of cooling water (12) into the intermediate space (11).

7. Wind farm according to one of Claims 1 to 6, containing a pressure-monitoring unit (141) for monitoring the water pressure in the cooling-water layer (12).

8. Wind farm according to Claim 7, wherein the pressure-monitoring unit (141) comprises an expansion tank (141).

9. Wind farm (4) according to one of Claims 1 to 8, containing at least one offshore wind turbine (40), wherein a cable arrangement (2) extends from the lower region of the offshore wind turbine (40) into the sea (M) through an air space (L).

10. Wind farm according to one of Claims 1 to 9, wherein a connection element (13) of the cooling apparatus (1) is arranged in the region of the air space (L).

11. Wind farm according to one of Claims 1 to 10, containing a control device (42) for controlling the wind turbines (40) according to a monitored pressure in the water layer (12) of the cooling apparatus (1).

12. Method for providing a wind farm according to one of Claims 1 to 11 with a power cable arrangement (2), wherein the following steps are carried out:
1) accommodating the cable arrangement (2) in an outer pipe (10) such that an intermediate space (11) for accommodation of a cooling-water layer (12) remains between the outer pipe (10) and the cable arrangement (2), and placing connection elements (13) at the end points of the cable arrangement (2), wherein a connection element (13) comprises a weld seam connection device (136, 137, 138, 139) for establishing a weld seam connection (131, 132) between the cable arrangement (2) and the outer pipe (10) ;
2) establishing a water-tight weld seam connection (131, 132) between the cable arrangement (2) and the outer pipe (10),
3) filling the intermediate space (11) with a water layer (12), and
4) regulating the water pressure in the water layer (12).

13. Method according to Claim 12, wherein, temporally before step 1), air pockets are washed out of the outer pipe (10) and/or a pig is guided through the outer pipe (10).

## Revendications

1. Parc éolien (4) comprenant une pluralité d'agencements de câbles (2) pour la transmission de puissance électrique à partir d'installations d'énergie éolienne (40) et comprenant une pluralité de dispositifs de refroidissement (1) pour refroidir les agencements de câbles (2), dans lequel un des dispositifs de refroidissement comprend ce qui suit :
- un tube extérieur (10) qui est conçu pour recevoir l'agencement de câbles (2) de telle sorte qu'un espace intermédiaire (11) reste entre le tube extérieur (10) et l'agencement de câbles (2) pour recevoir une couche d'eau de refroidissement (12),
- un élément de liaison (13) pour établir une liaison (131, 132) étanche à l'eau entre le tube extérieur (10) et l'agencement de câbles (2) ;
**caractérisé en ce qu'**un des dispositifs de refroidissement (1) comprend un régulateur de pression (14) pour réguler la pression d'eau dans la couche d'eau de refroidissement (12) et **en ce qu'**un élément de liaison (13) est agencé sur une installation éolienne (40) au niveau d'un point d'extrémité (20) de l'agencement de câbles (2), dans lequel l'élément de liaison (13) comprend un dispositif de liaison par cordon de soudure (136, 137, 138, 139) pour établir une liaison par cordon de soudure (131, 132) entre l'agencement de câbles (2) et le tube extérieur (10).

2. Parc éolien selon la revendication 1, **caractérisé en ce que** le dispositif de liaison par cordon de soudure (136, 137, 138, 139) est réalisé en tant qu'un dispositif d'électrofusion.

3. Parc éolien selon la revendication 2, **caractérisé en ce que** le dispositif de liaison par cordon de soudure (136, 137, 138, 139) comprend au moins un élément chauffant (136, 137) intégré de manière annulaire dans l'élément de liaison (13) .

4. Parc éolien selon la revendication 3, dans lequel le dispositif de liaison par cordon de soudure (136, 137, 138, 139) est doté de conducteurs (138, 139) guidant vers l'extérieur, de sorte qu'une tension adaptée puisse être appliquée à un élément de chauffage (136, 137).

5. Parc éolien selon l'une des revendications 1 à 4, dans lequel la liaison par cordon de soudure (131, 132) comprend un premier cordon de soudure (131) disposé entre l'élément de liaison (13) et le tube extérieur (10) et un deuxième cordon de soudure (132) disposé entre l'élément de liaison (13) et l'agencement de câbles (2).

6. Parc éolien selon l'une des revendications 1 à 5, comprenant une ouverture d'entrée (133) pour verser de l'eau de refroidissement (12) dans l'espace intermédiaire (11).

7. Parc éolien selon l'une des revendications 1 à 6, comprenant une unité de surveillance de pression (141) pour surveiller la pression d'eau dans la couche d'eau de refroidissement (12).

8. Parc éolien selon la revendication 7, dans lequel l'unité de surveillance de pression (141) comprend un vase d'expansion (141).

9. Parc éolien (4) selon l'une des revendications 1 à 8, comprenant au moins une installation d'énergie éolienne offshore (40), dans lequel un agencement de câbles (2) s'étend de la partie inférieure de l'installation d'énergie éolienne offshore (40) dans la mer (M) au travers d'un espace d'air (L) .

10. Parc éolien selon l'une des revendications 1 à 9, dans lequel un élément de liaison (13) du dispositif de refroidissement (1) est disposé au niveau de l'espace d'air (L) .

11. Parc éolien selon l'une des revendications 1 à 10, comprenant un dispositif de commande (42) pour commander les installations d'énergie éolienne (40) selon une pression surveillée dans la couche d'eau (12) du dispositif de refroidissement (1).

12. Procédé de fourniture d'un parc éolien selon l'une des revendications 1 à 11 comprenant un agencement de câbles de courant (2), dans lequel les étapes suivantes sont exécutées :
1) réception de l'agencement de câbles (2) dans un tube extérieur (10) de telle sorte qu'un espace intermédiaire (11) reste entre le tube extérieur (10) et l'agencement de câbles (2) pour recevoir une couche d'eau de refroidissement (12), placement d'éléments de liaison (13) aux points d'extrémité de l'agencement de câbles (2), dans lequel un élément de liaison (13) comprend un dispositif de liaison par cordon de soudure (136, 137, 138, 139) pour établir une liaison par cordon de soudure (131, 132) entre l'agencement de câbles (2) et le tube extérieur (10) ;
2) établissement d'une liaison par cordon de soudure (131, 132) étanche à l'eau entre l'agencement de câbles (2) et le tube extérieur (10),
3) remplissage de l'espace intermédiaire (11) avec une couche d'eau (12), et
4) régulation de la pression d'eau dans la couche d'eau (12) .

13. Procédé selon la revendication 12, dans lequel chronologiquement avant l'étape 1), des poches d'air sont évacuées hors du tube extérieur (10) et/ou un écouvillon est passé à travers le tube extérieur (10).
